(19) Europäisches Patentamt
European Patent Office
Office européen des brevets

(11) **EP 4 316 644 A1**

(12) **EUROPEAN PATENT APPLICATION**
published in accordance with Art. 153(4) EPC

(43) Date of publication:
**07.02.2024 Bulletin 2024/06**

(21) Application number: **22775522.0**

(22) Date of filing: **22.03.2022**

(51) International Patent Classification (IPC):
$B01J\ 20/02\ ^{(2006.01)}$   $B01J\ 20/28\ ^{(2006.01)}$
$B01J\ 20/34\ ^{(2006.01)}$   $C02F\ 1/28\ ^{(2023.01)}$
$C22B\ 3/06\ ^{(2006.01)}$   $C22B\ 3/24\ ^{(2006.01)}$
$C22B\ 11/00\ ^{(2006.01)}$   $C22B\ 34/34\ ^{(2006.01)}$

(52) Cooperative Patent Classification (CPC):
**B01J 20/02; B01J 20/28; B01J 20/34; C02F 1/28;
C22B 3/06; C22B 3/24; C22B 11/00; C22B 34/34**

(86) International application number:
**PCT/JP2022/012954**

(87) International publication number:
**WO 2022/202738 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021   JP 2021050484**

(71) Applicant: **DIC Corporation
Tokyo 174-8520 (JP)**

(72) Inventors:
• **MIZUTA, Seiji
Sakura-shi, Chiba 285-8668 (JP)**
• **YUAN, Jianjun
Sakura-shi, Chiba 285-8668 (JP)**

(74) Representative: **Kraus & Lederer
Patentanwälte PartGmbB
Thomas-Wimmer-Ring 15
80539 München (DE)**

(54) **NOBLE METAL ADSORBENT, NOBLE METAL RECOVERY METHOD, AND NOBLE METAL ADSORBENT RECYLING METHOD**

(57)   Provided are a noble metal adsorbent, a method for recovering a noble metal, and a method for regenerating a noble metal adsorbent that can easily recover noble metal while high adsorption performance for noble metals is achieved. The noble metal adsorbent according to the present invention includes a metal sulfide. The metal sulfide is constituted of, for example, molybdenum disulfide particles. The method for recovering a noble metal according to the present invention includes adsorbing a noble metal onto the noble metal adsorbent, and thereafter heating and volatilizing the noble metal adsorbent in the presence of oxygen to recover the noble metal.

EP 4 316 644 A1

Fig.7

**Description**

Technical Field

The present invention relates to a noble metal adsorbent, a method for recovering a noble metal, and a method for regenerating a noble metal adsorbent.

The present application claims priority based on Japanese Patent Application No. 2021-050484 filed in Japan on March 24, 2021, and the content thereof is incorporated herein.

Background Art

Noble metals such as gold, silver, and platinum have been highly valued since ancient times due to rarity and durability of noble metal. In modern times, noble metals also have an important position in industrial applications such as catalysts. However, the amount of mined gold, for example, is increasing every year and it is said that the remaining mineable years are about 18 years from 2013 standard. Along with social unrest, the prices of noble metals have been rising over the long term with repeating violent fluctuation.

On the other hand, recent precision instruments have contained large amounts of gold and silver and wastes of the precision instruments are described as urban mines. The reserves of Japan's urban mines are estimated to 16% of gold and 22% of silver as of 2006 and effective utilization of these reserves is an important issue.

A solvent extraction method and an ion exchange resin method are common conventional methods for recovering noble metals. The solvent extraction method has complicated processes and the disposal of the large amount of generated waste liquid causes a problem. On the other hand, the ion exchange resin method tends to be high cost due to the use of synthetic resins with specific introduced functional groups and the complicated processes of desorption from the resin.

As alternative methods, various new forms of noble metal adsorbent materials have been studied in recent years. For example, it has been disclosed that gold (Au), silver (Ag), and palladium (Pd) can be adsorbed using an insoluble gel formed of a proanthocyanidin oligomer having an average degree of polymerization of 3 to 4 cross-linked with an equal mole of glutaraldehyde as a cross-linking agent (PTL 1).

As another method, recovering noble metals using porous porphyrin polymers represented by specific structural formulas has been disclosed. It has been said that this method has such adsorption performance that noble metals can be concentrated even at low concentrations such as seawater, and the polymer can be reused as an adsorbent by acid treatment after adsorption (PTL 2).

An example in which copper sulfide is used as a mercury adsorbent (PTL 3) and an example in which a hydrogel having a thiourea skeleton, which is an organosulfur compound, is used as an adsorbent for gold, platinum, and palladium have been reported (PTL 4).

Citation List

Patent Literature

PTL 1: JP-A-2019-72722
PTL 2: JP-A-2019-104911
PTL 3: JP-A-2019-171257
PTL 4: JP-A-2011-183376

Summary of Invention

Technical Problem

However, although PTL 1 has disclosed that a gel made from grape seed-derived polyphenol serving as a raw material selectively adsorbs gold, there is no quantitative knowledge of the amount of adsorbed gold or no knowledge of a method for recovering the adsorbed gold.

In PTL 2, synthesis of the porous porphyrin polymer serving as the adsorbent is highly difficult and a gold reduction process is complicated because the dissolved gold ions are required to be reduced to zero-valent gold in order to recover the gold after adsorption by acid treatment. Furthermore, it is reported that 1.617 mg of noble metal can be adsorbed per 1 mg of the porphyrin polymer when the adsorption target is the gold ion and 0.1968 mg of noble metal can be adsorbed per 1 mg of the porphyrin polymer when the adsorption target is the platinum ion. However, in order to achieve even higher adsorption capacity, light irradiation for a long time of about 48 hours is required and adsorption performance achieved by a simpler method and a shorter time has been desired.

Furthermore, in PTL 3, there is no disclosure of use of copper sulfide for the adsorption of noble metals other than mercury or adsorption performance in such cases. In PTL 4, the amount of gold and other noble metals adsorbed by the hydrogel having the thiourea skeleton, which is an organosulfur compound, is not sufficient and there is no disclosure with respect to the adsorption limit concentration, leaving room for improvement.

An object of the present invention is to provide a noble metal adsorbent, a method for recovering a noble metal, and a method for regenerating a noble metal adsorbent that can easily recover noble metal while high adsorption performance for noble metals is achieved.

Solution to Problem

As a result of intensive research, the inventors of the present invention have found that when a metal sulfide, in particular molybdenum disulfide particles, are used as a noble metal adsorbent, high adsorption performance can be achieved due to the selectivity of the metal sulfide to noble metals. In particular, the inventors of the present invention have found that when molybdenum disulfide particles are used as an adsorbent for gold, the selectivity of the molybdenum disulfide particles to gold is extremely high, and the amount of adsorbed noble metal per unit mass of the molybdenum disulfide particles is significantly increased compared to that of conventional noble metal adsorbents, and thus the adsorption performance can be improved.

Producing molybdenum disulfide particles using "nanometer-sized molybdenum oxide particles", which the present applicant possesses, as a raw material allows nanometer-sized molybdenum disulfide particles having a plate-like structure and a large specific surface area per unit weight, which is difficult to achieve by grinding mine products of the particle-containing resin composition or synthesizing from general-purpose molybdenum oxide (micro-meter size) to be obtained. Therefore, the inventors of the present invention have found that when these molybdenum disulfide particles are used as the noble metal adsorbent, in particular an adsorbent for gold, the gold adsorption speed and the gold adsorption amount exceptionally increase due to the large specific surface area and affinity between gold and sulfur of the molybdenum disulfide particles.

Furthermore, noble metals are adsorbed to the noble metal adsorbent and thereafter the noble metal adsorbent is vaporized by heating in the presence of oxygen, whereby the noble metal can be recovered without changing the valence of the noble metal, that is, while the noble metal remains zero valence. Therefore, the inventors of the present invention have found that noble metals can be easily recovered because this technology eliminates the need for reduction treatment of noble metal elements and the environmental load associated with the reduction process is eliminated. In particular, the inventors of the present invention have found that when noble metals are adsorbed onto the molybdenum disulfide particles and thereafter the molybdenum disulfide particles are heated in the presence of oxygen, whereby the noble metals can be more easily recovered due to the high volatility of the molybdenum oxide particles formed by oxidizing the molybdenum disulfide.

In addition, the inventors of the present invention also have found that the volatilized metal oxide is recovered, and thereafter the metal oxide is sulfurized by a method such as heating in the presence of a sulfur source or by other means to obtain a metal sulfide, and thus the metal sulfide serving as the noble metal adsorbent can be easily regenerated and consumption of metal resources can be reduced by reusing the obtained metal sulfide.

That is, the present invention provides the following constitutions.

[1] A noble metal adsorbent comprising a metal sulfide.

[2] The noble metal adsorbent according to [1], in which the metal sulfide is constituted of molybdenum disulfide particles.

[3] The noble metal adsorbent according to [2], in which a median diameter $D_{50}$ of the molybdenum disulfide particles determined by a dynamic light scattering method is 10 nm or more and 1,000 nm or less.

[4] The noble metal adsorbent according to [2] or [3], in which

a shape of primary particles of the molybdenum disulfide particles is a disk shape, a ribbon shape, or a sheet shape; and
a thickness is in a range of 3 nm to 100 nm.

[5] The noble metal adsorbent according to any one of [2] to [4], in which a specific surface area of the molybdenum disulfide particles is 10 m$^2$/g or more measured by a BET method.

[6] The noble metal adsorbent according to any one of [2] or [5], in which in a radial distribution function of the molybdenum disulfide particles obtained from an extended X-ray absorption fine structure (EXAFS) spectrum of a K absorption edge of molybdenum, a ratio (I/II) of peak intensity I caused by Mo-S to peak intensity II caused by Mo-Mo is more than 1.0.

[7] The noble metal adsorbent according to any one of [2] or [6], in which the molybdenum disulfide particles have a 2H crystal structure and a 3R crystal structure of molybdenum disulfide,

in a profile of the molybdenum disulfide particles obtained from powder X-ray diffraction (XRD) using Cu-K$\alpha$ rays as an X-ray source, a peak in the vicinity of 39.5° and a peak in the vicinity of 49.5° are derived from the 2H crystal structure and a peak in the vicinity of 32.5°, a peak in the vicinity of 39.5°, and a peak in the vicinity of 49.5° are derived from the 3R crystal structure, and

half widths of the peak in the vicinity of 39.5° and the peak in the vicinity of 49.5° are 1° or more.

[8] The noble metal adsorbent according to any one of [2] to [7], in which a noble metal adsorbed onto the metal sulfide is gold.

[9] A method for recovering a noble metal, the method comprising: adsorbing a noble metal onto the noble metal adsorbent according to any one of [1] to [8], and thereafter dissolving the noble metal adsorbent in an oxidizing solution to recover the noble metal.

[10] A method for recovering a noble metal, the method comprising: adsorbing a noble metal onto the noble metal adsorbent according to any one of [1] to [8], and thereafter heating and volatilizing the noble metal adsorbent in the presence of oxygen to recover the noble metal.

[10] A method for regenerating a noble metal adsorbent, the method comprising recovering a metal oxide volatilized by the method for recovering a noble metal according to [9], and thereafter sulfurizing the metal oxide to regenerate the noble metal adsorbent constituted of the metal sulfide. Advantageous Effects of Invention

According to the present invention, noble metals can be easily recovered while high adsorption performance for noble metals is achieved.

Brief Description of Drawings

FIG. 1 is a schematic view showing one example of an apparatus used for production of molybdenum trioxide particles serving as a raw material of molybdenum disulfide particles.

FIG. 2 is a graph showing a result of an X-ray diffraction (XRD) pattern of commercially available molybdenum disulfide particles together with a diffraction pattern of a 2H crystal structure of molybdenum disulfide ($MoS_2$).

FIG. 3 is a graph showing a result of an X-ray diffraction (XRD) pattern of molybdenum disulfide particles obtained in Synthesis Example 1 together with a diffraction pattern of a 3R crystal structure of molybdenum disulfide ($MoS_2$), the diffraction pattern of the 2H crystal structure of molybdenum disulfide ($MoS_2$), and a diffraction pattern of molybdenum dioxide ($MoO_2$).

FIG. 4 is an AFM image of a synthesized molybdenum disulfide particle.

FIG. 5 is a graph showing a cross section of the molybdenum disulfide particle shown in FIG. 4.

FIG. 6 is a graph showing an extended X-ray absorption fine structure (EXAFS) spectrum of a K absorption edge of molybdenum measured using the molybdenum disulfide particles obtained in Synthesis Example 1.

FIG. 7 is a graph showing X-ray diffraction (XRD) patterns when gold is adsorbed on the noble metal adsorbent obtained in Synthesis Example 1 in Example 2.

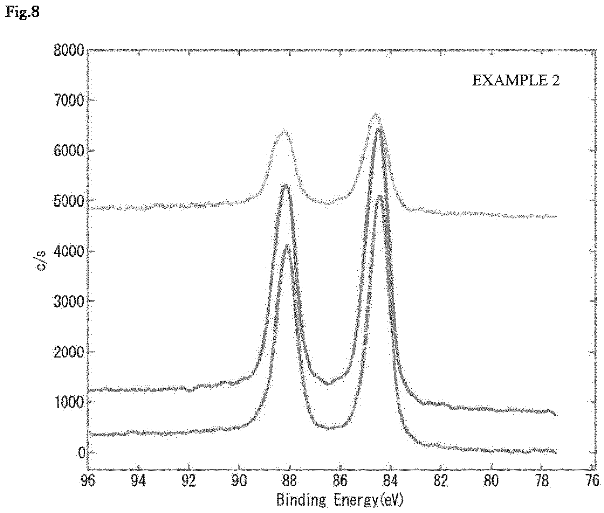

FIG. 8 is a graph showing XPS patterns when gold is adsorbed on the molybdenum disulfide particles in Example 2.

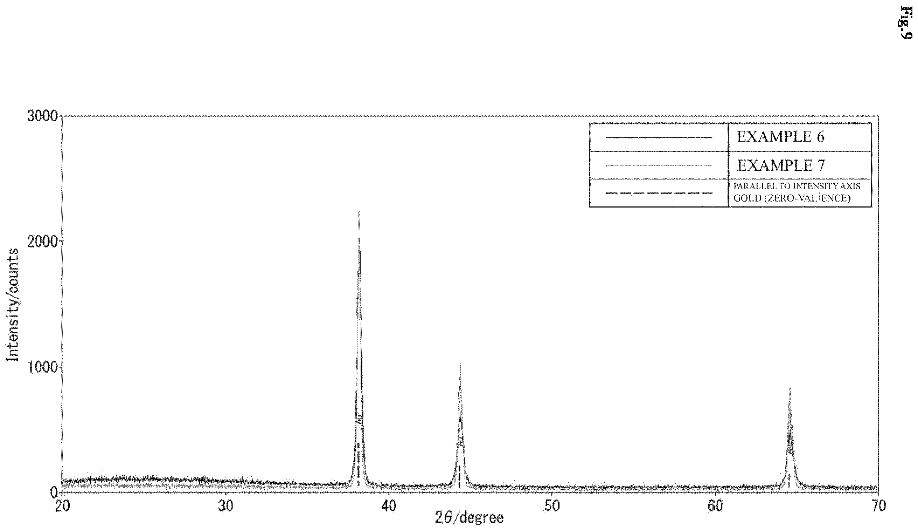

FIG. 9 is a graph showing X-ray diffraction (XRD) patterns when gold is recovered from the molybdenum disulfide particles after the gold adsorption in Examples 6 and 7.

FIG. 10 is a graph showing results of measuring the leakage concentration of the gold ion when the molybdenum disulfide particles obtained in Synthesis Example 1 are packed in a column and a solution containing gold is passed through the column.

Description of Embodiments

Hereinafter, the embodiments of the present invention will be described in detail with reference to the drawings.

<Noble Metal Adsorbent>

The noble metal adsorbent according to the present embodiment contains a metal sulfide and is preferably constituted of the metal sulfide. The noble metal adsorbent according to the present embodiment has selectivity for noble metals and exhibits high adsorption performance for noble metals. The metal sulfide preferably includes molybdenum disulfide particles as a main component and more preferably is constituted of the molybdenum disulfide particles. It is considered that the high adsorption performance for noble metals is due to the fact that the median diameter $D_{50}$ of the molybdenum disulfide particles is as small as 1,000 nm or less, for example. It is considered that the above selective adsorption performance for noble metals is caused by, for example, exhibiting high affinity of sulfur elements in metal sulfides to noble metals. Examples of the form of the noble metal adsorbent include metal sulfide particles and molybdenum disulfide particles are preferable. The metal sulfide particles preferably contain molybdenum disulfide particles and more preferably are constituted of molybdenum disulfide particles.

Examples of noble metals that can be adsorbed by the noble metal adsorbent according to the present embodiment include silver (Ag), gold (Au), platinum (Pt), palladium (Pd), rhodium (Rh), iridium (Ir), ruthenium (Ru), and osmium (Os). The noble metal adsorbent according to the present embodiment is particularly excellent in the adsorption performance of gold. It is considered that the excellent adsorption performance for gold is due to the fact that the median diameter $D_{50}$ of the molybdenum disulfide particles is as small as 1,000 nm or less, molybdenum disulfide has the 3R crystal structure, and/or affinity between gold and sulfur is remarkably high.

When the molybdenum disulfide particles are used as the noble metal adsorbent, one or more of the noble metals selected from gold (Au), silver (Ag), platinum (Pt), palladium (Pd), and ruthenium (Ru) are preferable as the noble metals adsorbed onto the molybdenum disulfide particles.

The median diameter $D_{50}$ of the molybdenum disulfide particles in the noble metal adsorbent according to the present embodiment, which is obtained by a dynamic light scattering method, is 10 nm or more and 1,000 nm or less, preferably 600 nm or less, more preferably 500 nm or less, and particularly preferably 400 nm or less from the viewpoint of the above effects. The median diameter $D_{50}$ of the molybdenum disulfide particles may be 10 nm or more, 20 nm or more, or 40 nm or more. The median diameter $D_{50}$ of the molybdenum disulfide particles is measured using, for example, a dynamic light scattering-type particle diameter distribution analyzer (Nanotrac Wave II manufactured by MicrotracBEL Corp.) or a laser diffraction-type particle size distribution analyzer (SALD-7000 manufactured by Shimadzu Corporation).

The molybdenum disulfide particles in the noble metal adsorbent according to the present embodiment preferably contain molybdenum disulfide having a 3R crystal structure. It is considered that since the 3R crystal structure is included, an edge portion of the crystal of the molybdenum disulfide particles increases, thus an ion adsorption site increases, which contributes to further improvement of the adsorption performance for the noble metal. Further, since the 3R crystal structure is included, the adsorption performance for gold among the noble metals is exceptionally improved. It is presumed that this improvement is due to the specific surface area derived from a nanostructure of the molybdenum disulfide particles.

That the molybdenum disulfide particles include the 3R crystal structure, which is a metastable structure, can be distinguished by forming a peak in the vicinity of 32.5°, a peak in the vicinity of 39.5°, and a peak in the vicinity of 49.5° together from a synthesized peak (broad peak) of the 2H crystal structure and the 3R crystal structure in the spectrum obtained from the powder X-ray diffraction (XRD) using Cu-Kα rays as the X-ray source.

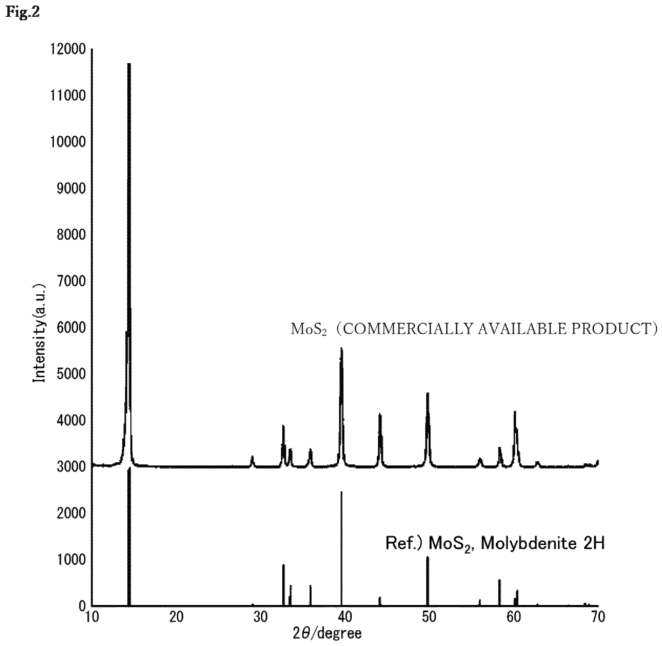

Further, the molybdenum disulfide particles in the noble metal adsorbent according to the present embodiment preferably contain molybdenum disulfide having the 2H crystal structure and the 3R crystal structure. The commercially available molybdenum disulfide particles include a large number of particles having a particle diameter of more than 1 um, are hexagonal solids, and mostly have a 2H crystal structure as a crystal structure, as shown in FIG. 2. On the contrary, the molybdenum disulfide particles produced by the "method for producing molybdenum trioxide particles" and the "method for producing molybdenum disulfide particles" described later include the 2H crystal structure and the 3R crystal structure, and the median diameter $D_{50}$ can be easily adjusted to 10 nm or more and 1,000 nm or less.

That the molybdenum disulfide particles have the 2H crystal structure and the 3R crystal structure can be found by, for example, using Rietveld analysis software (High Score Plus, manufactured by Malvern Panalytical Ltd.), which, for example, can take the crystallite size into consideration. This Rietveld analysis software can calculate the crystallite size in addition to crystal structure types and the ratio thereof that are calculated by common Rietveld analysis by simulating the entire diffraction profile of XRD using a crystal structure model including the crystallite size, comparing this profile to the diffraction profile of XRD obtained from experiments, optimizing the crystal lattice constant of the crystal structure model, crystal structure factors such as atomic coordinates, weight fractions (presence ratios), and the like with a least-square method so as to minimize the residue between the diffraction profile obtained from the experiment and the diffraction profile obtained by the calculation, and identifying and quantifying each phase of the 2H crystal structure and the 3R crystal structure with high precision. Hereafter, in the present patent, the above analysis method using High Score Plus will be referred to as "extended-type Rietveld analysis".

With respect to the molybdenum disulfide particles in the noble metal adsorbent according to the present embodiment, in the profile of the molybdenum disulfide particles obtained from the powder X-ray diffraction (XRD) using Cu-Kα rays as an X-ray source, a peak in the vicinity of 39.5° and a peak in the vicinity of 49.5° are preferably derived from the 2H crystal structure, a peak in the vicinity of 32.5°, a peak in the vicinity of 39.5°, and a peak in the vicinity of 49.5° are preferably derived from the 3R crystal structure, and half widths of the peak in the vicinity of 39.5° and the peak in the vicinity of 49.5° are preferably 1° or more. Furthermore, the molybdenum disulfide particles may include a crystal structure such as a 1H crystal structure in addition to the 2H crystal structure and the 3R crystal structure of molybdenum disulfide.

Primary particles of the molybdenum disulfide particles in a two-dimensional image when the molybdenum disulfide particles are photographed with a transmission electron microscopy (TEM) may have a particle shape, a spherical shape, a plate shape, a needle shape, a string shape, a ribbon shape, or a sheet shape or may have a combination of these shapes. The shape of the primary particles of the molybdenum disulfide particles is preferably a disk shape, the ribbon shape, or the sheet shape. The shape of the primary particles of 50 molybdenum disulfide particles preferably has a size in the range of length (vertical) $\times$ width (horizontal) = 50 nm to 1,000 nm $\times$ 50 nm to 1,000 nm, more preferably a size in the range of 100 nm to 500 nm $\times$ 100 nm to 500 nm, and particularly preferably a size in the range of 50 nm to 200 nm $\times$ 50 nm to 200 nm. The shape of the primary particles of the molybdenum disulfide particles preferably has a thickness that is measured with an atomic force microscope (AFM) in a size in the range of 3 nm or more, and more preferably in a size in the range of 5 nm or more. The shape of the primary particles of the molybdenum disulfide particles preferably has a thickness that is measured with an atomic force microscope (AFM) in a size in the range of 100 nm or less, more preferably in a size in the range of 50 nm or less, and particularly preferably in a size in the range of 20 nm or less. The shape of the primary particles of the molybdenum disulfide particles may have a thickness that is measured with an atomic force microscope (AFM) in a size in the range of 40 nm or less, and in a size in the range of 30 nm or less. When the shape of the primary particles of the molybdenum disulfide particles is the disk shape, the ribbon shape, or the sheet shape, the specific surface area of the molybdenum disulfide particles can be increased. The shape of the primary particles of the molybdenum disulfide particles is preferably the disk shape, the ribbon shape, or the sheet shape and preferably has a thickness in the range of 3 nm to 100 nm. Here, the disk shape, the ribbon shape, or the sheet shape means a thin layer shape. There is no clear distinction among the disk shape, the ribbon shape, and the sheet shape. For example, when the thickness is 10 nm or less, the shape can be determined to be the sheet shape; when the thickness is 10 nm or more and length/width is equal to or more than 2, the shape can be determined to be the ribbon shape; and when the thickness is 10 nm or more and length/width is less than 2, the shape can be determined to be the disk shape. The aspect ratio of the primary particles of the molybdenum disulfide particles, that is, a value of (Length (longitudinal and transverse size)/Thickness (height)) is preferably 1.2 to 1,200, more preferably 2 to 800, still more preferably 5 to 400, and particularly preferably 10 to 200 on average of 50 particles. In the shape of the primary particles of 50 molybdenum disulfide particles, the shape, the length, the width, and the thickness can also be measured by an atomic force microscope (AFM) and the aspect ratio can be calculated from the measurement results.

The shape of the primary particles of the molybdenum disulfide particles is not a simple spherical shape, but a disk shape, a ribbon shape, or a sheet shape with a large aspect ratio, which is expected to increase the contact area between the molybdenum disulfide particles and radioactive materials and contributes to an increase in the amount of adsorbed radioactive materials.

The specific surface area of the molybdenum disulfide particles in the noble metal adsorbent according to the present embodiment, which is measured by the BET method, is preferably 10 $m^2/g$ or more, more preferably 20 $m^2/g$ or more, and particularly preferably 30 $m^2/g$ or more. The specific surface area of the molybdenum disulfide particles, which is measured by the BET method, may be 40 $m^2/g$ or more, 50 $m^2/g$ or more, or 60 $m^2/g$ or more. The specific surface area of the molybdenum disulfide particles, which is measured by the BET method, may be 300 $m^2/g$ or less, 200 $m^2/g$ or less, or 100 $m^2/g$ or less.

It is considered that since the noble metal adsorbent in which the specific surface area of the molybdenum disulfide particles in the noble metal adsorbent according to the present embodiment, which is measured by the BET method, is 10 $m^2/g$ or more, can increase a contact area with the noble metals, and thus the adsorption performance for noble metals is improved.

In a radial distribution function of the molybdenum disulfide particles in the noble metal adsorbent according to the present embodiment, which is obtained from the extended X-ray absorption fine structure (EXAFS) spectrum of the K absorption edge of molybdenum, the ratio (I/II) of the peak intensity I caused by Mo-S to the peak intensity II caused by Mo-Mo is preferably more than 1.0, more preferably 1.1 or more, and particularly preferably 1.2 or more.

In the crystal structure of molybdenum disulfide, the distance between Mo and S is almost the same in the 2H crystal structure and the 3R crystal structure due to a covalent bond, so that the peak intensity caused by Mo-S is the same in the 2H crystal structure and the 3R crystal structure in the extended X-ray absorption fine structure (EXAFS) spectrum of the K absorption edge of molybdenum. On the other hand, since the 2H crystal structure of molybdenum disulfide is the hexagonal crystal, the hexagon is located 90° directly below the same hexagon of Mo atoms, and thus the distance between Mo and Mo is shorter, and the peak intensity II caused by Mo-Mo is stronger.

Conversely, since the 3R crystal structure of molybdenum disulfide is the rhombohedral crystal, the hexagon is present not 90° directly below the hexagon but shifted by half of the hexagon, and thus the distance between Mo and Mo becomes larger and the peak intensity II caused by Mo-Mo is weaker.

The ratio (I/II) is smaller in a pure 2H crystal structure of molybdenum disulfide, but the ratio (I/II) is larger as molybdenum disulfide has the 3R crystal structure.

In the 3R crystal structure, since the hexagons of the Mo atoms in each of three layers are offset from each other by half of the hexagon, it can be expected that the interaction between the layers is small and the noble metals are easily adsorbed compared to the 2H crystal structure in which hexagons of Mo atoms in two layers are arranged vertically and regularly.

Since the presence of molybdenum trioxide is considered to adversely influence the adsorption performance for the noble metals, the conversion rate $R_C$ of the molybdenum disulfide particles in the noble metal adsorbent according to the present embodiment to $MoS_2$ is preferably 70% or more, more preferably 80% or more, and particularly preferably 90% or more.

Since the molybdenum disulfide particles in the noble metal adsorbent according to the present embodiment indicate a digit of the conversion ratio $R_C$ to $MoS_2$ close to 100%, the molybdenum disulfide particles have better adsorption performance for the noble metal than that of other molybdenum disulfide materials or precursors thereof which may contain or generate molybdenum trioxide as a by-product.

The conversion ratio $R_C$ of the molybdenum disulfide particles in the noble metal adsorbent according to the present embodiment to $MoS_2$ can be determined from the profile data obtained by X-ray diffraction (XRD) measurement of the molybdenum disulfide particles by a RIR (reference intensity ratio) method described later.

The radioactive material adsorbent according to the present embodiment is preferably constituted of the molybdenum disulfide particles ($MoS_2$), but is not limited thereto. The adsorbent may also be constituted of molybdenum sulfide particles represented by $MoS_x$ (X = 1 to 3) or may be constituted of one or more kinds of molybdenum sulfide particles represented by $MoS_x$ (X = 1 to 3).

The noble metal adsorbent according to the present embodiment can adsorb, remove, or recover noble metal ions, noble metals or noble metal compounds contained in noble metal-containing solutions, for example, noble metal-containing aqueous solutions. Further, the noble metal adsorbent according to the present embodiment may adsorb, remove, or recover noble metals or noble metal compounds contained in noble metal-containing gases.

When the noble metal adsorbent according to the present invention is used, the noble metal can be recovered from solutions having extremely low initial concentrations of the noble metal. For example, the initial concentration of the noble metal in the noble metal solution to be treated can be 10 ppm or less, 1 ppm or less, or 100 ppb or less. In particular, when the metal is gold, the initial concentration can be 10 ppb or less or 5 ppb or less.

<Method for Producing Noble Metal Adsorbent>

The method for producing a noble metal adsorbent according to the present embodiment is not particularly limited. For example, the noble metal adsorbent can be produced by heating a metal oxide in the presence of a sulfur source. The noble metal adsorbent according to the present embodiment is not limited to the adsorbent obtained by the production method described above. A commercially available metal sulfide, for example, commercially available molybdenum disulfide particles may be used as long as the adsorption performance of the present invention can be exhibited.

(Method for Producing Molybdenum Disulfide Particles in Noble Metal Adsorbent)

The molybdenum disulfide particles in the noble metal adsorbent according to the present embodiment can be produced, for example, by heating molybdenum trioxide particles in the presence of a sulfur source at a temperature of 200°C to 1,000°C.

The average particle diameter of the primary particles of the molybdenum trioxide particles is preferably 2 nm or more and 1,000 nm or less. The average particle diameter of the primary particles of the molybdenum trioxide particles refers to an average value of the primary particle diameters of randomly selected 50 primary particles when the molybdenum trioxide particles are photographed with a scanning electron microscope (SEM) or a transmission electron microscope (TEM), the major axis (the Feret diameter of the longest portion observed) and the minor axis (the short Feret diameter in a direction perpendicular to the Feret diameter of the longest portion) of the minimum unit particles (that is, the primary particles) constituting aggregates on a two-dimensional image are measured, and an average value thereof is defined as the primary particle diameter.

In the method for producing molybdenum disulfide particles according to the present embodiment, the average particle diameter of the primary particles of the molybdenum trioxide particle is preferably 1 um or less. From the viewpoint of the reactivity with sulfur, the average particle diameter is more preferably 600 nm or less, still more preferably 400 nm or less, and particularly preferably 200 nm or less. The average particle diameter of the primary particles of the molybdenum trioxide particles may be 2 nm or more, 5 nm or more, or 10 nm or more.

The molybdenum trioxide particles used for producing the molybdenum disulfide particles in the noble metal adsorbent according to the present embodiment are preferably made of an aggregate of primary particles containing molybdenum trioxide having a β crystal structure. Since the molybdenum trioxide particles have better reactivity with sulfur than that of conventional molybdenum trioxide particles having α crystals alone as a crystal structure and contain molybdenum trioxide having the β crystal structure, the conversion ratio $R_C$ to $MoS_2$ can increase in the reaction with the sulfur source.

The β crystal structure of molybdenum trioxide can be observed by the presence of a peak (in the vicinity of 2Θ: 23.01°, No. 86426 (inorganic crystal structure database, ICSD)) attributed to the plane (011) of the β crystal of MoOs in a spectrum obtained by the powder X-ray diffraction (XRD) using the Cu-Kα rays as the X-ray source. The α crystal structure of molybdenum trioxide can be observed by the presence of a peak of the plane (021) (in the vicinity of 2Θ: 27.32°, No. 166363 (inorganic crystal structure database, ICSD)) of an α crystal of MoOs.

The molybdenum trioxide particles preferably have a ratio (β (011)/α (021)) of intensity of a peak attributed to the plane (011) of the β crystal of MoOs (in the vicinity of 2Θ: 23.01°, No. 86426 (inorganic crystal structure database, ICSD)) to intensity of a peak attributed to the plane (021) of the α crystal of $MoO_3$ (in the vicinity of 2Θ: 27.32°, No. 166363 (inorganic crystal structure database, ICSD)) of 0.1 or more in the profile obtained by the powder X-ray diffraction (XRD) using the Cu-Kα rays as the X-ray source.

From the peak intensity attributed to the plane (011) of the β crystal of MoOs and the peak intensity attributed to the plane (021) of the α crystal of $MoO_3$, each maximum peak intensity is read to obtain the ratio (β (011)/α (021)).

In the molybdenum trioxide particles, the ratio (β (011)/α (021)) is preferably 0.1 to 10.0, more preferably 0.2 to 10.0, and particularly preferably 0.4 to 10.0.

The β crystal structure of molybdenum trioxide can also be observed by the presence of peaks at wavenumbers of 773 cm$^{-1}$, 848 cm$^{-1}$, and 905 cm$^{-1}$ in a Raman spectrum obtained by Raman spectroscopy. The α crystal structure of molybdenum trioxide can be observed by the presence of peaks at wavenumbers of 663 cm$^{-1}$, 816 cm$^{-1}$, and 991 cm$^{-1}$.

In the production method according to the present embodiment, the average particle diameter of the primary particles of the molybdenum trioxide particles may be 5 nm or more and 2,000 nm or less.

Examples of the sulfur source include sulfur and hydrogen sulfide. These sulfur sources may be used alone or in combination of two sulfur sources.

The production method according the present embodiment may include heating the molybdenum trioxide particles made of the aggregate of the primary particles containing molybdenum trioxide having the β crystal structure at a temperature of 100°C to 800°C in the absence of the sulfur source, and then heating the molybdenum trioxide particles at a temperature of 200°C to 1,000°C in the presence of the sulfur source.

The heating time in the presence of the sulfur source may be 1 hour to 20 hours, 2 hours to 15 hours, or 3 hours to 10 hours as long as the sulfurization reaction proceeds sufficiently.

In the method for producing molybdenum disulfide particles according to the present embodiment, the feed ratio of the amount of S in the sulfur source to the amount of $MoO_3$ in the molybdenum trioxide particles is preferably set under conditions under which the sulfurization reaction proceeds sufficiently. With respect to 100 mol% of the amount of $MoO_3$ in the molybdenum trioxide particles, the amount of S in the sulfur source is preferably 450 mol% or more, preferably 600 mol% or more, and preferably 700 mol% or more. With respect to 100 mol% of the amount of $MoO_3$ in the molybdenum trioxide particles, the amount of S in the sulfur source may be 3,000 mol% or less, 2,000 mol% or less, or 1,500 mol% or less.

In the production method according to the present embodiment, the heating temperature in the presence of the sulfur source may be any temperature at which the sulfurization reaction proceeds sufficiently, and is preferably 320°C or more, more preferably 340°C or more, and particularly preferably 360°C or more. The heating temperature may be 320°C to 1,000°C, 340°C to 800°C, or 360°C to 600°C.

As the heating temperature in the presence of the sulfur source becomes higher, the molybdenum disulfide particles having more excellent crystalline can be synthesized in the temperature range of 320°C to 1,000°C. As the heating temperature in the presence of the sulfur source becomes lower, the molybdenum disulfide particles having larger specific surface area can be synthesized in the temperature range of 320°C to 1,000°C.

In the method for producing molybdenum disulfide particles according to the present embodiment, the molybdenum trioxide particles preferably have a MoOs content of 99.5% or more as measured by fluorescent X-ray (XRF), whereby the conversion ratio $R_C$ to $MoS_2$ can be increased, and molybdenum disulfide having high purity and good storage stability, which generates no sulfides derived from impurities, can be obtained.

The molybdenum trioxide particles preferably have a specific surface area of 10 m$^2$/g or more and 100 m$^2$/g or less measured by the BET method.

In the molybdenum trioxide particles, the specific surface area is preferably 10 m$^2$/g or more, more preferably 20 m$^2$/g or more, and still more preferably 30 m$^2$/g or more from the viewpoint of excellent reactivity with sulfur. In the molybdenum trioxide particles, the specific surface area is preferably 100 m$^2$/g or less, may be 90 m$^2$/g or less, or may be 80 m$^2$/g or less from the viewpoint of facilitation in production.

In the molybdenum trioxide particles, a ratio (I/II) of peak intensity I caused by Mo-O to peak intensity II caused by Mo-Mo is preferably more than 1.1 in the radial distribution function obtained from the extended X-ray absorption fine structure (EXAFS) spectrum of the K absorption edge of molybdenum.

As for the peak intensity I caused by Mo-O and the peak intensity II caused by Mo-Mo, each maximum peak intensity is read to obtain the ratio (I/II). The ratio (I/II) is considered to indicate that the $\beta$ crystal structure of MoOs is obtained in the molybdenum trioxide particles, and the greater the ratio (I/II), the better the reactivity with sulfur.

In the molybdenum trioxide particles, the ratio (I/II) is preferably 1.1 to 5.0, and may be 1.2 to 4.0 or may be 1.2 to 3.0.

(Method for Producing Molybdenum Trioxide Particles)

The molybdenum trioxide particles can be produced by vaporizing a molybdenum oxide precursor compound to form molybdenum trioxide vapor and cooling the molybdenum trioxide vapor.

The method for producing molybdenum trioxide particles includes calcining a raw material mixture containing the molybdenum oxide precursor compound and a metal compound other than the molybdenum oxide precursor compound to vaporize the molybdenum oxide precursor compound so as to form molybdenum trioxide vapor. The ratio of the metal compound with respect to 100% by mass of the raw material mixture is preferably 70% by mass or less in terms of oxide.

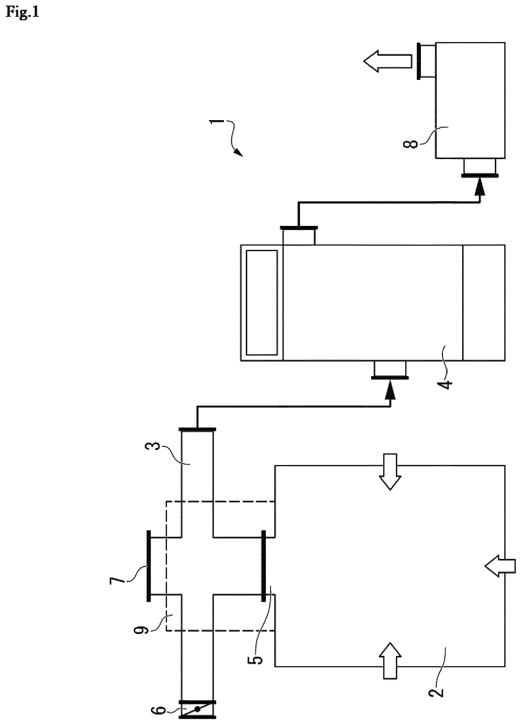

The method for producing molybdenum trioxide particles can be suitably performed by using a production apparatus 1 shown in FIG. 1.

FIG. 1 is a schematic view of an example of an apparatus used for producing the molybdenum trioxide particles. The production apparatus 1 includes a calcining furnace 2 for calcining the molybdenum trioxide precursor compound or the raw material mixture to vaporize the molybdenum trioxide precursor compound, a cross-shaped cooling pipe 3 connected to the calcining furnace 2 for particle forming the molybdenum trioxide vapor vaporized by the calcining, and a collection device 4 as a collection unit for collecting the particle-formed molybdenum trioxide particles in the cooling pipe 3. The calcining furnace 2 and the cooling pipe 3 are connected to each other via a discharge port 5. Further, in the cooling pipe 3, an opening degree adjustment damper 6 is disposed at an outside air intake port (not shown) at a left end portion, and an observation window 7 is disposed at an upper end portion. An air exhauster 8, which is a first air blowing unit, is connected to the collection device 4. When the air exhauster 8 exhausts air, the collection device 4 and the cooling pipe 3 suction the air, and the outside air is blown into the cooling pipe 3 from the opening degree adjustment damper 6 of the cooling pipe 3. That is, the air exhauster 8 passively blows air to the cooling pipe 3 by exhibiting a suction function. The production apparatus 1 may include an external cooling device 9, which allows cooling conditions for the molybdenum trioxide vapor generated from the calcining furnace 2 to be arbitrarily controlled.

Air is taken from the outside air intake port by opening the opening degree adjustment damper 6 and the molybdenum trioxide vapor vaporized in the calcining furnace 2 is cooled in an air atmosphere to obtain molybdenum trioxide particles, whereby the ratio (I/II) can be made more than 1.1, and the $\beta$ crystal structure of $MoO_3$ can be easily obtained in the molybdenum trioxide particles. When the molybdenum trioxide vapor is cooled in a state where an oxygen concentration in a nitrogen atmosphere is low, for example, when the molybdenum trioxide vapor is cooled using liquid nitrogen, the oxygen defect density is likely to increase and the ratio (I/II) is likely to decrease.

The molybdenum trioxide precursor compound is not particularly limited as long as the compound is a precursor compound for forming the molybdenum trioxide particles made of an aggregate of the primary particles containing molybdenum trioxide having the $\beta$ crystal structure.

The molybdenum trioxide precursor compound is not particularly limited as long as the compound forms molybdenum trioxide vapor by being calcined, and examples thereof include metal molybdenum, molybdenum trioxide, molybdenum dioxide, molybdenum disulfide, ammonium molybdate, phosphomolybdic acid ($H_3PMo_{12}O_{40}$), silicomolybdic acid ($H_4SiMo_{12}O_{40}$), aluminum molybdate, silicon molybdate, magnesium molybdate ($MgMo_nO_{3n+1}$ (n = 1 to 3)), sodium molybdate ($Na_2Mo_nO_{3n+1}$ (n = 1 to 3)), titanium molybdate, ferric molybdate, potassium molybdate ($K_2Mo_nO_{3n+1}$ (n = 1 to 3)), zinc molybdate, boron molybdate, lithium molybdate ($Li_2Mo_nO_{3n+1}$ (n = 1 to 3)), cobalt molybdate, nickel molybdate, manganese molybdate, chromium molybdate, cesium molybdate, barium molybdate, strontium molybdate, yttrium molybdate, zirconium molybdate, and copper molybdate. These molybdenum trioxide precursor compounds may be used alone or in combination of two or more thereof. The form of the molybdenum trioxide precursor compound is not particularly limited, and for example, the molybdenum trioxide precursor compound may be in a powder form such as molybdenum trioxide, or may be in a liquid form such as an aqueous solution of ammonium molybdate. The molybdenum trioxide precursor compound is preferably in the powder form having good handling properties and good energy efficiency.

As the molybdenum trioxide precursor compound, commercially available $\alpha$-crystal molybdenum trioxide is preferably used. Further, when ammonium molybdate is used as the molybdenum oxide precursor compound, the ammonium molybdate is converted by calcining into molybdenum trioxide that is thermodynamically stable, and thus the molybdenum oxide precursor compound to be vaporized becomes molybdenum trioxide.

The molybdenum trioxide vapor can also be formed by calcining the raw material mixture containing the molybdenum trioxide precursor compound and the metal compound other than the molybdenum trioxide precursor compound.

Among these molybdenum trioxide precursor compounds, the molybdenum trioxide precursor compound preferably includes molybdenum trioxide from the viewpoint of easily controlling the purity, the average particle diameter of the primary particles, and the crystal structure of the obtained molybdenum trioxide particles.

The molybdenum oxide precursor compound and the metal compound other than the molybdenum oxide precursor compound may form an intermediate, but even in this case, the intermediate is decomposed by calcining, and molybdenum trioxide can be vaporized in a thermodynamically stable form.

When the raw material mixture containing a molybdenum trioxide precursor compound and the metal compound other than the molybdenum trioxide precursor compound is calcined, the content of the molybdenum trioxide precursor compound is preferably 40% by mass to 100% by mass, and may be 45% by mass to 100% by mass or 50% by mass to 100% by mass with respect to 100% by mass of the raw material mixture.

The calcining temperature varies depending on the molybdenum trioxide precursor compound and the metal compound to be used, and the desired molybdenum trioxide particles, and is usually preferably a temperature at which the intermediate can be decomposed. For example, since aluminum molybdate can be formed as an intermediate when a molybdenum compound is used as the molybdenum trioxide precursor compound and an aluminum compound is used as the metal compound, the calcining temperature is preferably 500°C to 1,500°C, more preferably 600°C to 1,550°C, and still more preferably 700°C to 1,600°C.

The calcining time is not particularly limited, and may be, for example, 1 min to 30 h, 10 min to 25 h, or 100 min to 20 h.

The temperature rising rate varies depending on, for example, the molybdenum trioxide precursor compound and the metal compound to be used, and the desired properties of the molybdenum trioxide particles, and is preferably 0.1°C/min or more and 100°C/min or less, more preferably 1°C/min or more and 50°C/min or less, and still more preferably 2°C/min or more and 10°C/min or less from the viewpoint of production efficiency.

Next, the molybdenum trioxide vapor is cooled to form particles.

The molybdenum trioxide vapor is cooled by lowering the temperature of the cooling pipe. In this case, examples of a cooling method include cooling by blowing a gas into the cooling pipe as described above, cooling by a cooling mechanism included in the cooling pipe, and cooling by an external cooling device.

The molybdenum trioxide vapor is preferably cooled in an air atmosphere. When the molybdenum trioxide vapor is cooled in an air atmosphere to form molybdenum trioxide particles, the ratio (I/II) can be made more than 1.1, and the $\beta$ crystal structure of $MoO_3$ can be easily obtained in the molybdenum trioxide particles.

The cooling temperature (temperature of the cooling pipe) is not particularly limited, and is preferably -100°C to 600°C, and more preferably -50°C to 400°C.

The cooling rate of the molybdenum trioxide vapor is not particularly limited, and is preferably 100°C/s or more and 100,000°C/s or less and more preferably 1,000°C/s or more and 50,000°C/s or less. As the cooling rate of the molybdenum trioxide vapor increases, molybdenum trioxide particles having a smaller particle diameter and a larger specific surface area tend to be obtained.

When the cooling means is cooling by blowing a gas into the cooling pipe, the temperature of the blown gas is preferably -100°C to 300°C, and more preferably -50°C to 100°C.

The particles obtained by cooling the molybdenum trioxide vapor are transported to the collection device for collection.

In the method for producing molybdenum trioxide particles, the particles obtained by cooling the molybdenum trioxide vapor may be calcined again at a temperature of 100°C to 320°C.

That is, the molybdenum trioxide particles obtained by the method for producing molybdenum trioxide particles may be calcined again at a temperature of 100°C to 320°C. The calcining temperature in the re-calcining may be 120°C to 280°C or 140°C to 240°C. A calcining time in the re-calcining may be, for example, 1 minute to 4 hours, 10 minutes to 5 hours, or 100 minutes to 6 hours. However, a part of the $\beta$ crystal structure of molybdenum trioxide disappears due to re-calcining, and when calcining is performed at a temperature of 350°C or more for 4 hours, the $\beta$ crystal structure of the molybdenum trioxide particles disappears, the ratio ($\beta(011)/\alpha(021)$) is 0, and the reactivity with sulfur is impaired.

With the method for producing a noble metal adsorbent, the molybdenum disulfide particles in the noble metal adsorbent according to the present embodiment can be produced.

With the method for producing molybdenum trioxide particles, the molybdenum trioxide particles suitable for producing the molybdenum disulfide particles in the noble metal adsorbent according to the present embodiment can be produced.

<Method for Recovering Noble Metals>

In the method for recovering a noble metal according to the present embodiment, the noble metal is adsorbed onto the noble metal adsorbent, and thereafter the noble metal adsorbent is dissolved in an oxidizing solution, whereby the noble metal is recovered. In addition, in the method for recovering a noble metal according to the present invention, the noble metal is adsorbed onto the noble metal adsorbent, and thereafter the noble metal is recovered by heating and volatilizing the noble metal adsorbent in the presence of oxygen.

The noble metal can be easily recovered in a simple process by removing the noble metal adsorbent with acid or heat in a state of adsorbing the noble metal onto the noble metal adsorbent. When the molybdenum disulfide particles are used as the noble metal adsorbent, the noble metal, especially gold, is reduced to zero valence, so that the reduction treatment of noble metal elements is unnecessary. Therefore, gold having high purity can be easily recovered by simply removing the molybdenum disulfide particles and the environmental load associated with the reduction treatment can be eliminated.

When the noble metal adsorbent is dissolved in an oxidizing solution, for example, nitric acid or aqueous hydrogen peroxide can be used as the oxidizing solution.

When the molybdenum disulfide particles serving as the noble metal adsorbent are heated in the presence of oxygen, the heating temperature is preferably 400°C to 1,500°C, more preferably 650°C to 1,200°C, and still more preferably 750°C to 950°C. When the molybdenum disulfide particles are heated in the presence of oxygen, molybdenum disulfide is oxidized to turn into molybdenum trioxide. Due to high volatility of molybdenum trioxide, the molybdenum trioxide vaporizes at a relatively low heating temperature. Therefore, the noble metal can be easily separated from the molybdenum disulfide particles and the noble metal can be easily recovered. Although as low temperature as possible is preferable from the viewpoint of energy efficiency, a temperature at which the volatilization rate of molybdenum trioxide is sufficient is preferable. 400°C is the temperature at which molybdenum disulfide is oxidized and molybdenum trioxide smoothly volatilizes 750°C or more.

<Method for Regenerating Noble Metal Adsorbent>

In the method for regenerating a noble metal adsorbent according to the present embodiment, the volatilized metal oxide by the method for recovering a noble metal is recovered, and thereafter the noble metal adsorbent constituted of a metal sulfide is regenerated by sulfurizing the metal oxide.

In this regeneration method, the metal oxide vapor obtained by the method for recovering a noble metal may be sulfurized as it is, or the metal oxide vapor is once cooled to form metal oxide particles, and thereafter the metal oxide particles may be sulfurized by heating the metal oxide in the presence of the sulfur source.

When the molybdenum disulfide particles are used as the noble metal adsorbent, the volatilized molybdenum trioxide can be recovered by the method for recovering a noble metal, and thereafter the recovered molybdenum trioxide particles can be sulfurized by a method similar to the method for producing molybdenum disulfide particles described above, for example. This allows the molybdenum disulfide particles serving as the noble metal adsorbent to be easily regenerated. The obtained molybdenum disulfide particles are re-used as the noble metal adsorbent, whereby the consumption of molybdenum resources can be reduced.

[Examples]

Next, the present invention will be described in more detail with reference to Examples. However, the present invention is not limited to Examples described later.

[Method for Measuring Average Particle Diameter of Primary Particles of Molybdenum Trioxide Particles]

Molybdenum trioxide particles constituting molybdenum trioxide particles were photographed with a scanning electron microscope (SEM). The major axis (the Feret diameter of the longest portion observed) and the minor axis (the short Feret diameter in a direction perpendicular to the Feret diameter of the longest portion) of the minimum unit particles (that is, primary particles) constituting aggregates on a two-dimensional image were measured, and an average value thereof was defined as the primary particle diameter. The same operation was performed on 50 primary particles randomly selected, and the average particle diameter of the primary particles was calculated based on the average value of the primary particle diameters of these primary particles.

[Purity Measurement of Molybdenum Trioxide: XRF Analysis]

About 70 mg of a sample of recovered molybdenum trioxide particles was taken on a filter paper and covered with a PP film to perform composition analysis using a fluorescent X-ray analyzer (Primus IV manufactured by Rigaku Corporation). The amount of molybdenum determined based on an XRF analysis result was determined in terms of molybdenum trioxide (% by mass) with respect to 100% by mass of the molybdenum trioxide particles.

[Crystal Structure Analysis: XRD Method]

A sample of the recovered molybdenum trioxide particles or sulfide thereof was filled in a holder for a measurement sample having a depth of 0.5 mm, set in a wide-angle X-ray diffraction (XRD) apparatus (Ultima IV manufactured by Rigaku Corporation), and was subjected to measurement under conditions of Cu/K$\alpha$ rays, 40 kV/40 mA, a scanning speed of 2°/min, and a scanning range of 10° or more and 70° or less.

[Measurement of Specific Surface Area: BET Method]

A sample of the molybdenum trioxide particles or molybdenum disulfide particles was measured with a specific surface area meter (BELSORP-mini manufactured by MicrotracBEL Corp.), and the surface area per gram of the sample measured based on the amount of the adsorbed nitrogen gas by the BET method was calculated as the specific surface area ($m^2$/g).

[Conversion Ratio $R_C$ to $MoS_2$]

By a RIR (reference intensity ratio) method, the conversion ratio $R_C$ to $MoS_2$ was determined according to the following equation (1) using the RIR value $K_A$ of molybdenum disulfide ($MoS_2$), the integrated intensity $I_A$ of the peak in the vicinity of $2\theta = 14.4° \pm 0.5°$ attributed to the plane (002) or the plane (003) of molybdenum disulfide ($MoS_2$), the RIR value $K_B$ of each molybdenum oxide (MoOs as a raw material, and $Mo_9O_{25}$, $Mo_4O_{11}$, $MoO_2$, etc. as reaction intermediates), and the integrated intensity $I_B$ of the strongest line peak of each molybdenum oxide (MoOs as a raw material, and $Mo_9O_{25}$, $Mo_4O_{11}$, $MoO_2$, etc. as reaction intermediates).

$$R_C \; (\%) \; = \; (I_A/K_A)/(\Sigma(I_B/K_B)) \; \times \; 100 \; \cdots \; (1)$$

Here, each value described in the inorganic crystal structure database (ICSD) was used as the RIR value, and integrated X-ray powder diffraction software (PDXL) (manufactured by Rigaku Corporation) was used for analysis.

[Measurement of Extended X-ray Absorption Fine Structure (EXAFS)]

In a mortar, 36.45 mg of a molybdenum disulfide powder and 333.0 mg of boron nitride (manufactured by KISHIDA CHEMICAL CO., LTD.) were mixed. 123.15 mg of the mixture was weighed and compression molded into a tablet having a diameter of 8 mm to obtain a measurement sample. Using this measurement sample, the extended X-ray absorption fine structure (EXAFS) was measured by a transmission method with BL5S1 of Aichi Synchrotron Radiation Center. Athena (Internet <URL: https://bruceravel.github.io/demeter/>) was used for analysis.

[Measurement of Median Diameter $D_{50}$ of Molybdenum Disulfide Particles]

0.1 g of the molybdenum disulfide powder was added to 20 cc of acetone and subjected to an ultrasonic treatment in an ice bath for 4 hours, and then the concentration thereof was appropriately adjusted with acetone to a concentration within a measurable range of a dynamic light scattering-type particle diameter distribution analyzer (Nanotrac Wave II manufactured by MicrotracBEL) to obtain a measurement sample. Using this measurement sample, the particle diameter distribution in the range of a particle diameter in the range of 0.0001 um to 10 um was measured with a dynamic light scattering-type particle diameter distribution analyzer to calculate the median diameter $D_{50}$.
However, for those having a median diameter $D_{50}$ more than 10 um, a solution was similarly adjusted, and the particle diameter distribution in the range of particle diameters of 0.015 um to 500 um was measured with a laser diffraction-type particle size distribution analyzer (SALD-7000 manufactured by Shimadzu Corporation) to calculate the median diameter $D_{50}$.

[Method for Observing Particle Shape of Molybdenum Disulfide Particles]

The molybdenum disulfide particles were measured with an atomic force microscope (AFM) (Cypher-ES manufactured by Oxford Instruments Asylum Research Inc.) to observe the particle shape.

(Commercially Available Molybdenum Trioxide Particles)

FIG. 2 shows the result of an X-ray diffraction (XRD) pattern of a commercially available molybdenum disulfide reagent (manufactured by Kanto Chemical Co., Ltd.) together with a diffraction pattern of a molybdenum disulfide having a 2H crystal structure. It was found that this commercially available molybdenum disulfide reagent was molybdenum disulfide having the 2H crystal structure of 99% or more. Half widths of the peak in the vicinity of 39.5° and the peak in the vicinity of 49.5° were 0.23° and 0.22°, respectively.

For the commercially available molybdenum disulfide particles, the ratio (I/II) of the peak intensity I caused by Mo-S to the peak intensity II caused by Mo-Mo obtained based on the measurement of the extended X-ray absorption fine structure (EXAFS) of the K absorption edge of molybdenum and the specific surface area (SA) was 1.2.

The specific surface area of the commercially available molybdenum disulfide particles was measured by the BET method and was found to be 5.6 $m^2/g$.

The particle size distribution of the commercially available molybdenum disulfide particles was measured with a dynamic light scattering-type particle diameter distribution analyzer to obtain the median diameter $D_{50}$, which was found to be 13,340 nm.

(Synthesis Example 1)

(Production of Molybdenum Trioxide Particles)

1 kg of a transition aluminum oxide (activated alumina manufactured by Wako Pure Chemical Industries, Ltd., average particle diameter: 45 um) and 1 kg of molybdenum trioxide (manufactured by TAIYO KOKO Co., Ltd.) were mixed with each other, and the mixture was then placed in a sagger and calcined at a temperature of 1,100°C for 10 hours in the calcining furnace 2 of the production apparatus 1 shown in FIG. 1. During the calcining, outside air (blowing speed: 50 L/min, outside air temperature: 25°C) was introduced from a side surface and a lower surface of the calcining furnace 2. Molybdenum trioxide was evaporated in the calcining furnace 2, then cooled in the vicinity of the collection device 4, and precipitated as particles. An RHK simulator (manufactured by NORITAKE CO., LIMITED) was used as the calcining furnace 2, and a VF-5N dust collector (manufactured by AMANO Corporation) was used as the collection device 4.

After calcining, 1.0 kg of aluminum oxide, a blue powder, and 0.85 kg of the molybdenum trioxide particles collected by the collection device 4 were taken out from the sagger. The recovered molybdenum trioxide particles had an average particle diameter of primary particles of 80 nm, and by X-ray fluorescence (XRF) measurement, it was found that the purity of molybdenum trioxide was 99.7%. The specific surface area (SA) of the molybdenum trioxide particles measured by a BET method was 44.0 $m^2/g$.

(Production of Molybdenum Disulfide Particles)

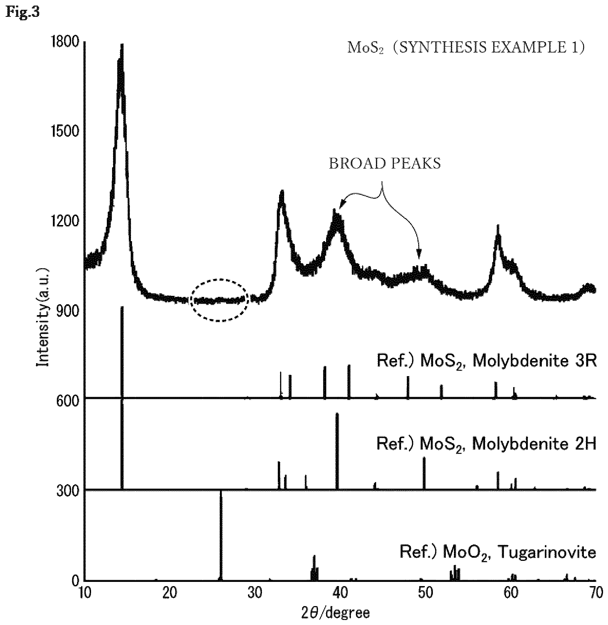

In a porcelain crucible, 1.00 g of the molybdenum trioxide particles and 1.57 g of a sulfur powder (manufactured by Kanto Chemical Co., Ltd.) were mixed with each other with a stirring rod such that the powder was uniform, and the mixture was calcined in a nitrogen atmosphere at 500°C for 4 hours to obtain a black powder. Here, the S amount in the sulfur was 705 mol% with respect to the MoOs amount of 100 mol% in the molybdenum trioxide particles. FIG. 3 shows a result of an X-ray diffraction (XRD) pattern of the black power (molybdenum disulfide particles in Synthesis Example 1) together with a diffraction pattern of a 3R crystal structure of molybdenum disulfide ($MoS_2$), a diffraction pattern of a 2H crystal structure of molybdenum disulfide ($MoS_2$), and a diffraction pattern of molybdenum dioxide ($MoO_2$) which are described in the inorganic crystal structure database (ICSD). Molybdenum dioxide ($MoO_2$) is a reaction intermediate.

In the X-ray diffraction (XRD) pattern in FIG. 3, only a peak attributed to molybdenum disulfide ($MoS_2$) was detected, and a peak not attributed to molybdenum disulfide ($MoS_2$) was not observed. That is, no peaks of reaction intermediates such as molybdenum dioxide ($MoO_2$), a by-product, were observed, and only a peak attributed to molybdenum disulfide ($MoS_2$) was observed, and thus it was found that the molybdenum disulfide particles in Synthesis Example 1 had a conversion rate to $MoS_2$ of 99% or more, and the reaction with sulfur proceeded rapidly.

When crystal structure analysis of the molybdenum disulfide particles in Synthesis Example 1 was performed by the X-ray diffraction (XRD), it was found that the 2H crystal structure and the 3R crystal structure were included. Half widths of the peak in the vicinity of 39.5° and the peak in the vicinity of 49.5° were 2.36° and 3.71°, respectively, which were wider than those of commercially available molybdenum trioxide particles.

The specific surface area of the molybdenum disulfide particles in Synthesis Example 1 was measured by the BET method and was found to be 67.8 $m^2/g$.

The particle size distribution of the molybdenum disulfide particles in Synthesis Example 1 was measured by a dynamic light scattering-type particle diameter distribution analyzer to obtain the median diameter $D_{50}$, which was found to be 170 nm.

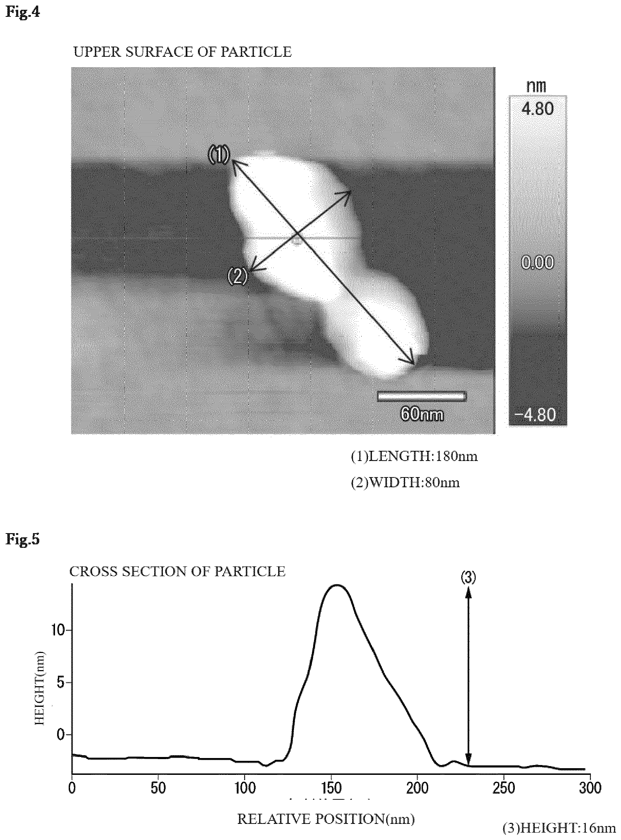

FIG. 4 shows an AFM image of the synthesized molybdenum disulfide particles. FIG. 4 is the AFM image obtained after the measurement and shows the upper surface of a molybdenum disulfide particle. A length (longitudinal) × a width (transverse) was determined from this AFM image and was found to be 180 nm × 80 nm. FIG. 5 is a graph showing the cross-section of the molybdenum disulfide particle shown in FIG. 4. A thickness (height) was determined from this cross-sectional view and was found to be 16 nm. Therefore, the value of the aspect ratio (length (vertical)/thickness (height)) of the primary particles of the molybdenum disulfide particles was 11.25.

The average value of 50 molybdenum disulfide particles including the molybdenum disulfide particle shown in FIG. 4 was Length (longitudinal) × Width (transverse) × Thickness (height) = 198 nm × 158 nm × 19 nm.

Representative examples of the AFM measurement results of the molybdenum disulfide particles are shown in Table 1. In Table 1, "Molybdenum disulfide particle (1)" is the molybdenum disulfide particle shown in FIG. 3. "Molybdenum disulfide particle (2)" is the molybdenum disulfide particle having the longest length and "Molybdenum disulfide particle (3)" is the particle having the shortest length in the measured molybdenum disulfide particles. "Molybdenum disulfide particle (4)" has relatively thick thickness, and "Molybdenum disulfide particle (5)" has the thinnest thickness. "Molybdenum disulfide particle (6)" is the particle having the largest aspect ratio. "Molybdenum disulfide particle (7)" is the particle having the thickest thickness and having the smallest aspect ratio.

[Table 1]

| | Particle shape | Length (longitudinal) [nm] | Width (transverse) [nm] | Thickness (height) [nm] | Aspect ratio [-] |
|---|---|---|---|---|---|
| Molybdenum disulfide particles (1) | Ribbon | 180 | 80 | 16 | 11.25 |
| Molybdenum disulfide particles (2) | Disk | 500 | 400 | 13 | 38.46 |
| Molybdenum disulfide particles (3) | Sheet | 60 | 60 | 5 | 12 |
| Molybdenum disulfide particles (4) | Disk | 180 | 130 | 40 | 4.5 |
| Molybdenum disulfide particles (5) | Sheet | 80 | 80 | 3 | 26.67 |
| Molybdenum disulfide particles (6) | Sheet | 320 | 300 | 4 | 80 |
| Molybdenum disulfide particles (7) | Disk | 200 | 150 | 70 | 2.86 |

The extended X-ray absorption fine structure (EXAFS) of the molybdenum disulfide particles produced in Synthesis Example 1 was measured. FIG. 4 shows an extended X-ray absorption fine structure (EXAFS) spectrum of a K absorption edge of molybdenum. In a radial distribution function obtained from the spectrum, the ratio (I/II) of the peak intensity I caused by Mo-S to the peak intensity II caused by Mo-Mo was 1.2.

(Synthesis Example 2)

Molybdenum disulfide particles were produced using the same method and conditions as those in Synthesis Example 1 except that the calcining temperature was changed to 400°C.

The specific surface area of the molybdenum disulfide particles in Synthesis Example 2 was measured by the BET method and was found to be 80.4 $m^2$/g.

The particle size distribution of the molybdenum disulfide particles in Synthesis Example 2 was measured by a dynamic light scattering-type particle diameter distribution analyzer to obtain the median diameter $D_{50}$, which found to be 270 nm.

[Evaluation of Adsorption for Noble Metal (Gold)]

<Example 1>

A diluted solution was prepared by diluting a 1,000 ppm gold standard solution (manufactured by NACALAI TESQUE, INC.) with ion-exchanged water so that an initial gold concentration was 561 ppm.

30 g of the obtained diluted solution was placed in a polymer test tube having a volume of 50 mL. 30 mg of commercially available molybdenum disulfide powder (molybdenum disulfide reagent manufactured by Kanto Chemical Co., Ltd.) was added as an adsorbent and the tube was stirred for 24 hours at a rotational speed of 15 rpm with a vertical rotation stirrer (Rotamix RKVSD manufactured by TOWA LABO Corporation).

After 3 hours, 6 hours, and 24 hours of stirring time each, the sample solution was filtered through a 0.2-um syringe filter, and the remaining gold concentration in the sample solution was quantitatively determined by ICP optical emission spectrometer (ICP-OES, Optima 8300 manufactured by PerkinElmer Co., Ltd.). Using the residual gold concentration in the sample solution after 24 hours and the amount of a fed molybdenum disulfide powder, the gold adsorption amount per gram (g/g) of the adsorbent in 24 hours was calculated from the following formula.

```
24-Hour gold adsorption amount = (Initial gold concentration -
Gold concentration after 24 hours) × Liquid volume/Amount of
fed molybdenum disulfide powder
```

<Example 2>

The gold residual concentration in the sample solution after 24 hours and the gold adsorption amount per gram (g/g) of the adsorbent in 24 hours were calculated by the same method as the method in Example 1 except that the molybdenum disulfide powder obtained in Synthesis Example 1 was used instead of the commercially available molybdenum disulfide powder.

<Example 3>

The gold residual concentration in the sample solution after 24 hours and the gold adsorption amount per gram of the adsorbent in 24 hours were calculated by the same method as the method in Example 1 except that 10 mg of the molybdenum disulfide powder in Synthesis Example 1 was fed into 50 g of a diluted solution having an initial gold concentration of 470 ppm.

<Example 4>

The gold residual concentration in the sample solution after 24 hours and the gold adsorption amount per gram of the adsorbent in 24 hours were calculated by the same method as the method in Example 3 except that the amount of the fed molybdenum disulfide powder in Synthesis Example 1 was changed to 5 mg.

<Comparative Example 1>

The gold adsorption amount per gram of the adsorbent in 24 hours was calculated in the same method as the method in Example 1 except that the carbon (KURARAY COAL (registered trademark) manufactured by KURARAY CO., LTD.) was used instead of the commercially available molybdenum disulfide powder.

[Table 2]

| | Adsorbent | Amount of added adsorbent [mg] | | Liquid amount [g] | Gold concentration in solution | | | | Amount of adsorbed gold after 24 hours [g/g] |
|---|---|---|---|---|---|---|---|---|---|
| | | | | | Initial [ppm] | After 3 hours [ppm] | After 6 hours [ppm] | After 24 hours [ppm] | |
| Example 1 | Commercially available MoS$_2$ | 30 | | 30 | 561 | 552 | 557 | 555 | 0.006 |
| Example 2 | MoS$_2$ in Synthesis Example 1 | 30 | | 30 | 561 | 0.12 | <0.1 | <0.1 | 0.56 |

(continued)

| | Adsorbent | Amount of added adsorbent [mg] | | Liquid amount [g] | Gold concentration in solution | | | | Amount of adsorbed gold after 24 hours [g/g] |
|---|---|---|---|---|---|---|---|---|---|
| | | | | | Initial [ppm] | After 3 hours [ppm] | After 6 hours [ppm] | After 24 hours [ppm] | |
| Example 3 | $MoS_2$ in Synthesis Example 1 | 10 | | 50 | 470 | - | - | <0.1 | 2.35 |
| Example 4 | $MoS_2$ in Synthesis Example 1 | 5 | | 50 | 470 | - | - | 67 | 4.03 |
| Comparative Example 1 | Carbon | 30 | | 30 | 561 | 506 | 499 | 555 | 0.006 |

From the result in Table 2, in Example 1, the gold concentration in the solution after 24 hours was 555 ppm and the gold adsorption amount was 0.006 (g/g) when 30 mg of the commercially available molybdenum disulfide powder was used as the adsorbent.

In Example 2, the gold concentration in the solution after 24 hours was less than 0.1 ppm and the gold adsorption amount was 0.56 (g/g) when 30 mg of the molybdenum disulfide powder in Synthesis Example 1 was used. Therefore, it was found that the molybdenum disulfide powder in Synthesis Example 1 had exceptionally higher gold adsorption performance than that of the commercially available molybdenum disulfide particles in Example 1.

In Example 2, it was found that when XRD of the molybdenum disulfide powder after gold adsorption was measured, the molybdenum disulfide powder after gold adsorption was a mixture of nanometer-sized molybdenum disulfide particles ($MoS_2$) and zero valent gold from the diffraction pattern of the molybdenum disulfide powder (Synthesis Example 1) before gold adsorption and the spectrum peak of gold (zero valence) as shown in FIG. 5.

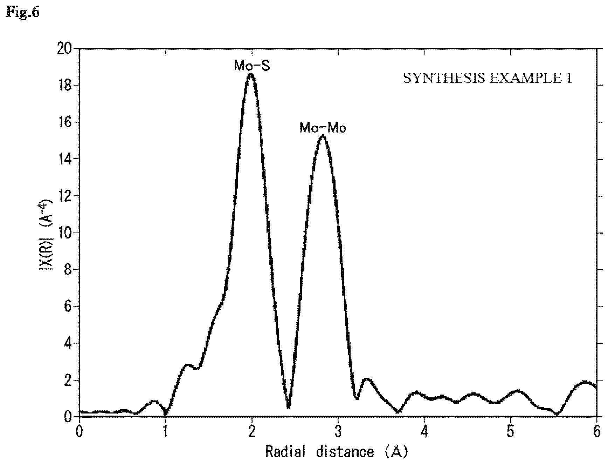

In Example 2, it was also found that when XPS of the molybdenum disulfide powder after gold adsorption was measured at three points, the average value of the peak tops at Au $4f_{7/2}$ was 84.4 eV as shown in FIG. 6, and thus the valence of gold adsorbed on the molybdenum disulfide powder was zero.

In Example 3, it was found that when 10 mg of the molybdenum disulfide powder in Synthesis Example 1 was used, which is a less amount of fed molybdenum disulfide powder, the gold concentration in the solution after 24 hours was less than 0.1 ppm and the gold adsorption amount was 2.35 (g/g), and thus a small amount of molybdenum disulfide as compared to Example 2 was able to adsorb gold up to the detection limit and the gold adsorption performance was exceptionally high.

In Example 4, when 5 mg of the molybdenum disulfide powder in Synthesis Example 1 was used, which is a further reduced amount of the fed molybdenum disulfide powder, the gold concentration in the solution after 24 hours was 67 ppm and the gold adsorption amount was 4.03 (g/g). Compared to Example 2, although gold could not be adsorbed to the detection limit after 24 hours of adsorption, the amount of adsorbed gold in the solution after 24 hours was about 4 g when a solution having an initial concentration of 470 ppm was used, and thus the gold adsorption performance was exceptionally higher than that of the adsorbents described in PTLs described above.

The difference in gold adsorption amount after 24 hours in the results between Example 1 and Example 4 is considered here. The commercially available molybdenum disulfide powder used in Example 1 is molybdenum disulfide having a 2H crystal structure of 99% or more. The median diameter $D_{50}$ measured by the dynamic light scattering-type particle diameter distribution analyzer is 13,340 nm. On the other hand, the molybdenum disulfide powder in Synthesis Example 1 used in Example 4 was molybdenum disulfide containing the 2H crystal structure and the 3R crystal structure. In addition, the median diameter $D_{50}$ measured by the dynamic light scattering-type particle diameter distribution analyzer is 170 nm. It is presumed that the reason why the gold adsorption amount after 24 hours in Example 4 is 4.03 g/g, which is extremely large, whereas the gold adsorption amount after 24 hours in Example 1 is 0.006 g/g is because each of the facts that the molybdenum disulfide powder in Synthesis Example 1 contains the 2H crystal structure and the 3R crystal structure and has a median diameter $D_{50}$ of 170 nm contributes. Therefore, for example, even a molybdenum disulfide powder having a 2H crystal structure of 99% or more and a median diameter $D_{50}$ of about 170 nm is considered to exhibit a relatively high gold adsorption amount. Even a molybdenum disulfide powder containing the 2H crystal structure and the 3R crystal structure and having a median diameter $D_{50}$ of about 13,340 nm is also considered to exhibit relatively high gold adsorption amount.

On the other hand, in Comparative Example 1, when carbon was used as the adsorbent, the gold concentration in the solution after 24 hours was 555 ppm and the gold adsorption amount was 0.006 (g/g), and thus the gold adsorption amount was equivalent to that in Example 1, in which the commercially available molybdenum disulfide powder was used as the adsorbent.

[Evaluation of Adsorption of Noble Metal (Gold) at Low Concentrations]

<Example 5>

A gold solution of approximately 5 ppb was prepared using a 1,000 ppm gold standard solution (manufactured by NACALAI TESQUE, INC.). To 40 g of this solution, 400 mg of the molybdenum disulfide powder obtained in Synthesis Example 1 was added as the adsorbent and the resultant mixture was stirred for 5 days. As a control experiment, a solution having no added adsorbent was stirred and determined to be the initial concentration. A mass spectrometer (ICP-MS Agilent 8900 manufactured by Agilent Technologies, Inc.) was used to measure the concentration. Results are shown in Table 3.

[Table 3]

| | Adsorbent | Amount of added adsorbent [mg] | Liquid amount [g] | Gold concentration in solution | | Amount of adsorbed gold after 5 days [g/g] |
|---|---|---|---|---|---|---|
| | | | | Initial [ppb] | After 5 days [ppb] | |
| Example 5 | $MoS_2$ in Synthesis Example 1 | 400 | 40 | 4.28 | <0.01 | 0.000427 |

From the result in Table 3, in Example 5, when a gold solution having an initial concentration of 4.28 ppb was used, the gold concentration after 5 days was less than 0.01 ppb. From this result, it was found that when the molybdenum disulfide powder obtained in Synthesis Example 1 was used, gold could be recovered from extremely low-concentration gold solutions, such as gold solutions discharged from urban mines, gold solutions from plating wastewater, or gold solutions extracted from natural sources such as seawater or volcanic hot water.

[Recovery of Gold after Adsorption]

<Example 6>

100 mL of 1,000 ppm gold standard solution (manufactured by NACALAI TESQUE, INC.) was used (100 mg as the actual amount of gold) and diluted with 100 mL of ion-exchanged water. To this diluted solution, 50 mg of the molybdenum disulfide powder obtained in Synthesis Example 1 was added as the adsorbent and the resultant mixture was stirred for 24 hours for adsorbing gold. After adsorption was completed, the molybdenum disulfide particles were separated by filtration.

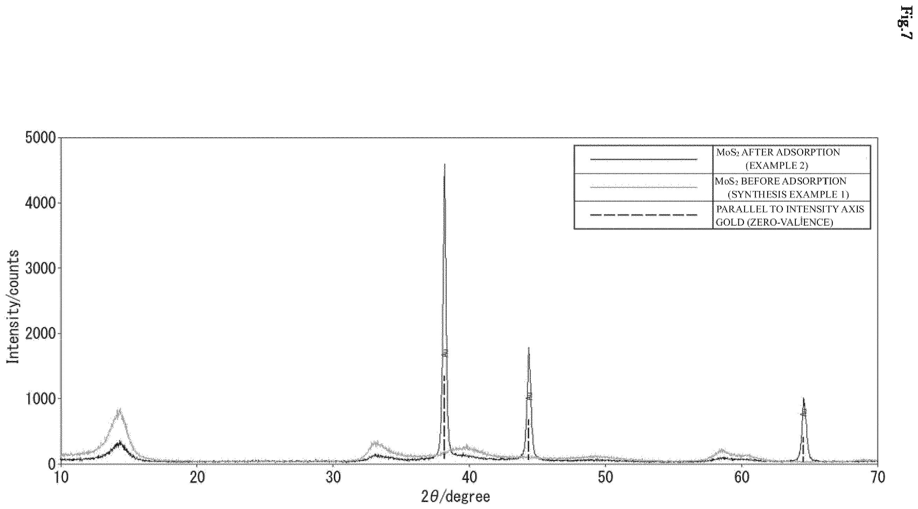

The filtered molybdenum disulfide particles were washed twice with 20 mL of nitric acid 1.40 (manufactured by Kanto Chemical Co., Ltd.) to dissolve molybdenum disulfide alone. Thereafter, the precipitate was washed with ion exchanged water to obtain 75.8 mg of yellow powder. It was found that when XRD of the obtained yellow powder was measured, the peak coincided with the peak top of gold as shown in FIG. 7, and thus the recovered yellow powder was gold (zero valence). The recovery ratio of gold was 76%.

The recovered yellow powder was analyzed for compositions by an X-ray fluorescence spectrometer (Primus IV manufactured by Rigaku Corporation) and the gold content was found to be 99.7% by mass. Gold having a content of more than 99.0% by mass can be easily re-refined to pure gold.

<Example 7>

Instead of the nitric acid washing in Example 6, the filtered molybdenum disulfide particles were placed in a crucible and heated at 900°C for 4 hours under an air atmosphere to obtain 88.8 mg of yellow powder. It was found that when XRD of the obtained yellow powder was measured, the peak coincided with the peak top of gold as shown in FIG. 7, and thus the recovered yellow powder was gold (zero valence). The recovery ratio of gold was 89%, which was a higher recovery ratio than that in Example 6. The reason why the recovery ratio of gold is about 80% in Example 6 is because the experimental scale is small and, in addition, the fine particles of molybdenum disulfide adhere to the container during the washing process cannot be removed, the filter paper captures molybdenum disulfide during the collection by filtration, and the fine particles do not precipitate sufficiently and thus cannot be recovered. On the other hand, it is considered that the recovery method in Example 7 is superior to the recovery method in Example 6 because no adhesion to the container or filter paper occurs and no gold is left unrecovered without precipitation.

When compositional analysis of the yellow powder recovered in Example 7 was performed using an X-ray fluorescence spectrometer (Primus IV manufactured by manufactured by Rigaku Corporation), the gold content was 99.2% by mass.

[Evaluation of Gold Adsorption onto Molybdenum Disulfide Particles Having Large Specific Surface Area]

<Example 8>

The gold residual concentration in the sample solution after 24 hours and the gold adsorption amount per gram of the adsorbent in 24 hours were calculated by the same method as the method in Example 4 except that the amount of the fed molybdenum disulfide powder in Synthesis Example 2 was changed to 4.5 mg. Results are shown in Table 4.

[Table 4]

| | Adsorbe nt | Amount of added adsorb ent [mg] | Liquid amount [g] | Gold concentration in solution | | | | Amount of adsorbed gold after 24 hours [g/g] |
| --- | --- | --- | --- | --- | --- | --- | --- | --- |
| | | | | Initial [ppm] | After 3 hours [ppm] | After 6 hours [ppm] | After 24 hours [ppm] | |
| Example 8 | $MoS_2$ in Synthes is Example 1 | 4.5 | 50 | 470 | - | - | <0.1 | 5.17 |

From the results in Table 4, it was found that in Example 8, when 4.5 mg of the molybdenum disulfide powder in Synthesis Example 2 was used, the gold concentration in the solution after 24 hours was less than 0.1 ppm and the gold adsorption amount was 5.17 g/g, and thus the gold adsorption performance was higher than that of the molybdenum disulfide powder in Synthesis Example 1 used in Example 4.

[Gold Adsorption Evaluation by Liquid Flow Test]

<Example 9>

The diluted solution was prepared by diluting 1,000 ppm gold standard solution (manufactured by NACALAI TESQUE, INC.) with ion-exchanged water so that the initial gold concentration was 100 ppm.

The obtained diluted solution was sent at a rate of 3.6 mL/minute and passed through a column having an internal volume of 3.6 cm$^3$ and packed with the molybdenum disulfide powder in Synthesis Example 1. The filled volume of the molybdenum disulfide powder is 3.6 cm$^3$.

The diluted solution that passed through the column was sampled, and the gold concentration remaining in the sampled solution was quantitatively determined by ICP optical emission spectrometer (ICP-OES, Optima 8300 manufactured by PerkinElmer Co., Ltd, Inc.). The detection limit of the gold concentration of ICP-OES in this measurement is 0.1 ppm.

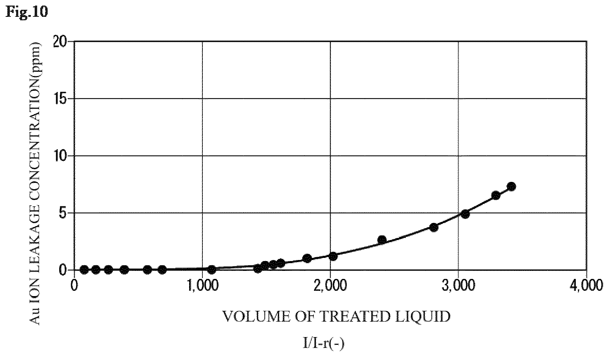

The result of the gold adsorption evaluation by this liquid flow test is shown in FIG. 10. The horizontal axis of FIG. 10 shows the volume of treated liquid in the column, and is defined as Total volume of passed liquid (l)/Packed molybdenum disulfide (l-r). This horizontal axis is referred to as the volume of treated liquid (no unit). The vertical axis of FIG. 10 shows the gold concentration remaining in the sampled solution, which is referred to as the gold ion leakage concentration.

It was found that the gold ion leakage concentration up to 1,070 in the volume of treated liquid was less than the detection limit of ICP-OES, and thus the residual gold concentration in the sampled solution was less than 0.1 ppm.

It was found that although the concentration of gold remaining in the sampled solution gradually increased after the volume of treated liquid reached 1,430, the residual gold concentration was merely 7.3 ppm even at a volume of treated liquid of 3,410, thus 92.7 ppm of the gold was adsorbed onto the molybdenum disulfide powder.

When gold is recovered from urban mines, plating wastewater, or gold-containing wastewater discharged from the gold ore refining process, gold is adsorbed and recovered by continuously passing a solution containing gold through a column packed with the noble metal (gold) adsorbent like in this Example. Therefore, the noble metal (gold) adsorbent according to the present invention is said to be suitable for recovering gold from urban mines, plating, or the gold-containing wastewater discharged from gold ore refining process.

[Gold Adsorption Evaluation in Seawater]

<Example 10>

The diluted solution was prepared by diluting a 1,000 ppm gold standard solution (manufactured by NACALAI TESQUE, INC.) with pseudo seawater so that the initial gold concentration was 100 ppt.

Pseudo seawater is a solution formed by dissolving 24.53 g of NaCl, 5.20 g of $MgCl_2$, 4.09 g of $Na_2SO_4$, 1.16 g of $CaCl_2$, 0.695 g of KCl, 0.201 g of $NaHCO_3$, 0.101 g of KBr, 0.027 g of $H_3BO_3$, 0.025 g of $SrCl_2$, and 0.003 g of NaF in one liter of ion-exchanged water. After dissolution, NaOH solution was added to control the pH to 8.1 to adjust the composition and the pH equivalent to those of seawater.

200 g of the obtained diluted solution was placed in a polymer test tube, 200 mg of the molybdenum disulfide powder in Synthesis Example 1 was added as the adsorbent, and the solution was stirred for 168 hours at a rotational speed of 15 rpm with a vertical rotating stirrer (Rotamix RKVSD manufactured by TOWA LABO Corporation).

After 168 hours of stirring time, the sample solution was filtered through a 0.2-um syringe filter, and the remaining gold concentration in the sample solution was quantitatively determined by triple quadrupole inductively coupled plasma mass spectrometry (ICP-MS/MS) (Agilent 8900 manufactured by Agilent Technologies, Inc.). The detection limit of gold concentration of ICP-MS/MS at this time is 30 ppt. Results are shown in Table 5.

[Table 5]

| | Adsorbent | Amount of added adsorbent [mg] | Liquid amount [g] | Gold concentration in solution | |
| --- | --- | --- | --- | --- | --- |
| | | | | Initial [ppt] | After 168 hours [ppt] |
| Example 10 | MoS$_2$ in Synthesis Example 1 | 200 | 200 | 100 | <30 |

From the results in Table 5, it was found that in Example 10, the gold concentration remaining in the solution after 168 hours was less than the detection limit of ICP-MS/MS and thus was less than 30 ppt. Therefore, at least 70 ppt of gold was adsorbed and recovered.

The concentration of gold in seawater is on the order of parts per trillion (ppt). From the results of Example 10, it can be said that the noble metal (gold) adsorbent according to the present invention is suitable for the application of adsorbing and recovering gold in ppt order from seawater. It is also considered that the noble metal (gold) adsorbent is suitable for recovering gold not only from seawater, but also from naturally discharged solutions containing low concentrations of gold, such as volcanic hot water.

Industrial Applicability

The noble metal adsorbent according to the present invention has a high adsorption performance of noble metals and can be suitably used as a noble metal recovering material at the time of recovering from urban mines, recovering from plating wastewater, recovering from gold-containing wastewater discharged from the gold ore refining process, or recovering from naturally discharged gold-containing solutions such as seawater and volcanic hot water. Above all, the noble metal adsorbent according to the present invention is particularly suitable for use as a gold recovering material from solutions containing gold at high concentration to extremely low concentration because of exceptional gold adsorption performance.

The method for recovering a noble metal and the method for regenerating a noble metal adsorbent according to the present invention are extremely useful as a method for recovering a noble metal from seas, rivers, or wastes because these methods can easily recover noble metals and regenerate the noble metal adsorbent, whereby reduction in the environmental load and reduction in the consumption of metal resources can be achieved.

Reference Signs List

1: Production apparatus
2: Calcining furnace
3: Cooling pipe
4: Collection device
5: Discharge port
6: Opening degree adjustment damper
7: Observation window
8: Air exhauster
9: External cooling device

**Claims**

1. A noble metal adsorbent comprising a metal sulfide.

2. The noble metal adsorbent according to claim 1, wherein the metal sulfide is constituted of molybdenum disulfide particles.

3. The noble metal adsorbent according to claim 2, wherein a median diameter $D_{50}$ of the molybdenum disulfide particles determined by a dynamic light scattering method is 10 nm or more and 1,000 nm or less.

4. The noble metal adsorbent according to claim 2 or 3, wherein a shape of primary particles of the molybdenum disulfide particles is a disk shape, a ribbon shape, or a sheet shape, and a thickness is in a range of 3 nm to 100 nm.

5. The noble metal adsorbent according to any one of claims 2 to 4, wherein a specific surface area of the molybdenum disulfide particles is 10 $m^2$/g or more measured by a BET method.

6. The noble metal adsorbent according to any one of claims 2 or 5, wherein in a radial distribution function of the molybdenum disulfide particles obtained from an extended X-ray absorption fine structure (EXAFS) spectrum of a K absorption edge of molybdenum, a ratio (I/II) of peak intensity I caused by Mo-S to peak intensity II caused by Mo-Mo is more than 1.0.

7. The noble metal adsorbent according to any one of claims 2 or 6, wherein

   the molybdenum disulfide particles have a 2H crystal structure and a 3R crystal structure of molybdenum disulfide,
   in a profile of the molybdenum disulfide particles obtained from powder X-ray diffraction (XRD) using Cu-K$\alpha$ rays as an X-ray source, a peak in the vicinity of 39.5° and a peak in the vicinity of 49.5° are derived from the 2H crystal structure and a peak in the vicinity of 32.5°, a peak in the vicinity of 39.5°, and a peak in the vicinity of 49.5° are derived from the 3R crystal structure, and
   half widths of the peak in the vicinity of 39.5° and the peak in the vicinity of 49.5° are 1° or more.

8. The noble metal adsorbent according to any one of claims 2 to 7, wherein a noble metal adsorbed onto the metal sulfide is gold.

9. A method for recovering a noble metal, the method comprising adsorbing a noble metal onto the noble metal adsorbent according to any one of claims 1 to 8, and thereafter dissolving the noble metal adsorbent in an oxidizing solution to recover the noble metal.

10. A method for recovering a noble metal, the method comprising adsorbing a noble metal onto the noble metal adsorbent according to any one of claims 1 to 8, and thereafter heating and volatilizing the noble metal adsorbent in the presence of oxygen to recover the noble metal.

11. A method for regenerating a noble metal adsorbent, the method comprising recovering a metal oxide volatilized by the method for recovering a noble metal according to claim 10, and thereafter sulfurizing the metal oxide to regenerate the noble metal adsorbent constituted of the metal sulfide.

**Fig.1**

Fig.2

**Fig.3**

Fig.4

UPPER SURFACE OF PARTICLE

(1)LENGTH:180nm

(2)WIDTH:80nm

Fig.5

CROSS SECTION OF PARTICLE

(3)HEIGHT:16nm

Fig.6

Fig.7

Fig.8

Fig.9

Fig.10

VOLUME OF TREATED LIQUID

l/l-r(-)

## INTERNATIONAL SEARCH REPORT

| International application No. |
|---|
| **PCT/JP2022/012954** |

### A. CLASSIFICATION OF SUBJECT MATTER

***B01J 20/02***(2006.01)i; ***B01J 20/28***(2006.01)i; ***B01J 20/34***(2006.01)i; ***C02F 1/28***(2006.01)i; ***C22B 3/06***(2006.01)i; ***C22B 3/24***(2006.01)i; ***C22B 11/00***(2006.01)i; ***C22B 34/34***(2006.01)i

FI: B01J20/02 A; B01J20/28 Z; B01J20/34 E; C02F1/28 B; C22B3/06; C22B3/24; C22B11/00 101; C22B34/34

According to International Patent Classification (IPC) or to both national classification and IPC

### B. FIELDS SEARCHED

Minimum documentation searched (classification system followed by classification symbols)

B01J20/02; B01J20/28; B01J20/34; C02F1/28; C22B3/06; C22B3/24; C22B11/00; C22B34/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 109706315 A (WUHAN UNIVERSITY OF TECHNOLOGY) 03 May 2019 (2019-05-03) examples 1-7, paragraph [0018], fig. 1 | 1-5, 8 |
| Y | | 1-8 |
| A | | 9-11 |
| X | JP 49-43472 B1 (TSUNODA, Yoshio) 21 November 1974 (1974-11-21) examples 1, 2, 6, column 2, lines 7-15 | 1-5, 8 |
| Y | | 1-8 |
| A | | 9-11 |
| Y | CN 105753053 A (FUZHOU UNIVERSITY) 13 July 2016 (2016-07-13) claims, examples, fig. 1, 2 | 1-8 |
| A | | 9-11 |
| P, X | WO 2021/060377 A1 (DIC CORP.) 01 April 2021 (2021-04-01) claims, etc. | 1-8 |
| P, A | | 9-11 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/012954**

| C. | DOCUMENTS CONSIDERED TO BE RELEVANT | |
|---|---|---|
| Category* | Citation of document, with indication, where appropriate, of the relevant passages | Relevant to claim No. |
| P, A | WO 2021/059325 A1 (DIC CORP.) 01 April 2021 (2021-04-01)<br>claims, etc. | 1-11 |

Form PCT/ISA/210 (second sheet) (January 2015)

INTERNATIONAL SEARCH REPORT
Information on patent family members

International application No.

**PCT/JP2022/012954**

| Patent document cited in search report | | | Publication date (day/month/year) | Patent family member(s) | | | Publication date (day/month/year) |
|---|---|---|---|---|---|---|---|
| CN | 109706315 | A | 03 May 2019 | (Family: none) | | | |
| JP | 49-43472 | B1 | 21 November 1974 | (Family: none) | | | |
| CN | 105753053 | A | 13 July 2016 | (Family: none) | | | |
| WO | 2021/060377 | A1 | 01 April 2021 | WO | 2021/059325 | A1 | |
| WO | 2021/059325 | A1 | 01 April 2021 | WO | 2021/060377 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021050484 A
- JP 2019072722 A
- JP 2019104911 A
- JP 2019171257 A
- JP 2011183376 A